# NEW EUROPEAN PATENT SPECIFICATION

(11) **EP 2 540 550 B2**
(45) Date of publication and mention of the opposition decision: **08.01.2025**
(45) Mention of the grant of the patent: 24.07.2019
(21) Application number: 12397518.7
(22) Date of filing: 18.06.2012
(51) Int. Cl.: B60K 28/14

(54) **A system and a method for hydraulic drive transmission in a working machine**
System und Verfahren für Hydraulikantrieb in einer Arbeitsmaschine
Système et procédé de transmission d'entraînement hydraulique dans une machine de travail

(30) Priority: 27.06.2011 FI 20115671
(43) Date of publication of application: 02.01.2013
(73) Proprietor: John Deere Forestry Oy, 33100 Tampere (FI)
(72) Inventor: Laakkonen, Teemu, 33720 Tampere (FI)
(74) Representative: Berggren Oy

(56) References cited:
- EP-A1- 0 530 380
- EP-A1- 2 123 947
- EP-A1- 2 278 193
- EP-A2- 0 761 491
- EP-A2- 1 223 069
- EP-A2- 1 223 069
- EP-B1- 1 577 566
- WO-A1-2006/128786
- WO-A2-2010/061384
- DE-A1- 4 219 876
- JP-A- 2002 039 374
- JP-A- 2008 169 912
- JP-A- H05 263 926
- JP-A- H06 191 317
- JP-A- H07 166 578
- US-A- 5 287 280
- US-A1- 2005 247 504
- US-A1- 2007 289 639
- US-B2- 6 474 063
- Zwei Amtsbescheide und zwei Bescheidserwiderungen aus finnischem Prüfunqsverfahren und Patentschrift

## Description

### Field of the invention

The invention relates to a method in controlling a system for hydraulic drive transmission in a working machine. The invention also relates to a system for hydraulic drive transmission in a working machine.

### Background of the invention

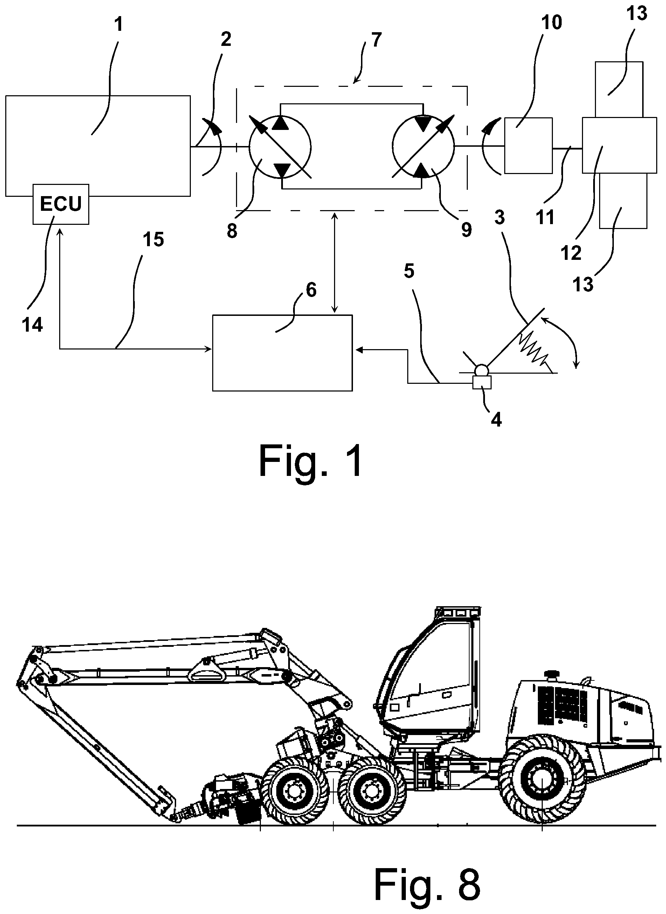

According to prior art, the power source used in all-terrain mobile working machines is, as shown in Fig. 1, for example a combustion engine 1 supplying mechanical power which is utilized, for example, in the drive transmission of the working machine. The mechanical power obtained from the shaft 2 of the combustion engine is proportional to the torque and the rotational speed given by the combustion engine 1. The rotational speed and the driving speed of the working machine are determined by a control value given by the driver, typically by applying a pedal 3. By means of a sensor 4, the pedal generates a setting signal 5 which is dependent on the position of the pedal 3 and is input in a control system 6. The control value can also be given in other ways, for example by applying a joystick. Typically, the greater the shift in the position of the pedal or the control value, the higher the rotational speed and driving speed achieved. If necessary, pressing the pedal 3 will also cause releasing of the operating brake of the working machine, after which the control system 6 will control a pump 8 with a control signal having a predetermined minimum level or value. Typically, the control signal is a current signal, on which the volume flow produced by the pump 8 is dependent. The operating brake is an actively controlled operating brake for keeping the working machine stationary, known as such and functioning, for example, in such a way that it is engaged when the pedal 3 is not pressed (or there is no control value) and is released when the pedal is pressed (or a sufficient control value is obtained).

The combustion engine generates the power needed at each moment, as required for *e.g.* moving and driving the working machine in different situations and on varying types of terrain. The mechanical power supplied by the combustion engine 1 is converted to hydraulic power in the pump 8. The hydraulic power is utilized in a motor 9, and the feed pressure produced by the pump 8 depends on the loading of the motor 9. The motor 9 is rotated by the volume flow of a pressurized medium. The rotational speed of the motor 9 determines the driving speed.

A problem found with the drive transmission, particularly in working machines, is their behaviour on the terrain when the working machine that has been stopped starts moving again. The pedal is pressed to pull out, and simultaneously, the operating brake is automatically released. Thus, when the aim is to pull out the working machine particularly on a hillside, moving uphill, it has been found that the working machine will first roll downhill. The weight of the working machine moves the forest machine downhill. In this situation, the pedal is pressed further down, until the working machine moves uphill, but there is still the disadvantage of rolling and skidding of the working machine downhill, even though the direction of rotation of the wheels were reversed, if the wheels lose their grip with the ground. Skidding should be avoided, particularly in snowy or icy conditions. The above-presented phenomenon makes it difficult to steer the working machine, and the skidding causes unnecessary breaking of the soil.

### Summary of the invention

It is an aim of the invention to eliminate the above presented problems. By means of the invention, it is safer to steer a working machine, and its behaviour is more predictable.

The method according to the invention in controlling a system for hydraulic drive transmission in a working machine and the system according to the invention for hydraulic drive transmission of a working machine are presented in the appended independent claims. The appended dependent claims present further examples of the invention.

In the presented solution, the terrain conditions, particularly the steepness of the terrain, are also taken into account in controlling the drive transmission. The terrain conditions are taken into account particularly in a situation where, for example, a working machine that has been stopped on a hillside pulls out again to drive uphill. In addition to a hillside, another sloping location on the terrain is possible as well, at which the working machine is stopped and on which the working machine is standing, when the aim is to move upwards on the sloping terrain. In other words, the direction of the movement to pull away, or the direction of the planned or intended driving movement, is upwards. Proceeding upwards can be performed either by backing up or driving forward.

In controlling the drive transmission, particularly the inclination of the working machine is taken into account, as measured by a separate sensor. The inclination of the working machine is determined by the terrain conditions.

In controlling the drive transmission, a parameter, a table, a rule, or a computing algorithm is utilized, which defines the interdependence between the inclination of the working machine and the control signal. Said control signal, in turn, determines the magnitude of the volume flow input to the motor, wherein it is, for example, the volume flow produced by the pump, or the volume flow controlled by the valve. The valve is normally a directional valve and preferably a proportional directional valve. The control signal or its minimum value is determined by the inclination. In an example, said interdependence is such that the magnitude of the volume flow controlled to the motor is the greater, the greater the inclination of the working machine. In an example, said control signal is determined by a control value or e.g. the position of the pedal first after the control value or the setting signal generated by the pedal has increased to a value that corresponds to the minimum value of the control signal, or is greater than that. Preferably, the interdependence between the control signal, or setting signal, and the driving speed remains the same when driving on a hillside and on a flat ground.

With the presented solution, the volume flow available to the motor is sufficient to produce, immediately or sufficiently rapidly, a pressure level that is sufficiently high to prevent the rotation of the motor and simultaneously of the wheels of the working machine in such a way that the working machine starts to roll in the wrong direction, that is, downhill. Previously, the value of the control signal, or its minimum value, was not set at a sufficiently high level so that *e.g*. the pump would produce the required pressure level immediately after the operating brake has been released and the wheels of the working machine can rotate. Alternatively, the volume flow provided by the valve has not been sufficient. This is because said rolling does not occur on flat terrain, and the weight of the working machine does not tend to move the working machine but it remains stationary. Moreover, there has been no reason to keep the volume flow or pressure level produced by the hydraulic control circuit at an elevated level to little avail, for example because of pressure losses. A result may also be an unnecessarily abrupt start on flat terrain, if the motor has too high a pressure level right after the release of the operating brake. With the presented solution, the above-presented problems are also avoided.

For harvesting, there are all-terrain mobile forest working machines, such as harvesters. The forest working machine comprises a device for processing tree trunks, for example a felling head which is intended for cutting and felling a standing tree trunk, or a harvester head which is intended for cutting, felling, delimbing, and sawing a standing tree trunk to pieces of desired length. The sawn trunks are collected by another known all-terrain mobile forest working machine, such as a forwarder. The forwarder comprises a grapple mounted at the end of a boom system, and the trunks are transported in its load space. Forest working machines are also known, in which the functions of the harvester and the forwarder are combined.

The presented solution can be applied in various mobile working machines, particularly in all-terrain mobile working machines. In particular, forest working machines are feasible, including various harvesters for cutting trees by means of, for example, a felling head, or, if necessary, for processing the trunks as well, for example by means of a harvester head. In particular, various forwarders for transporting tree trunks or logs are also feasible. Typically, said working machines comprise wheels which are controlled by hydraulic drive transmission. In said working machines, caterpillar tracks can also be applied, also in combination with wheels.

### Brief description of the drawings

In the following, the invention will be described in more detail by means of examples and with reference to the appended drawings, in which
- Fig. 1: illustrates the components and the principle of a system according to an example;
- Fig. 2: illustrates the operation of a pump and a motor in the system of Fig. 1;
- Fig. 3: illustrates the interdependence between the control signal for the pump and the measured inclination of the working machine;
- Figs 4 and 5: show the components of the system according to Fig. 1 in more detail;
- Fig. 6: illustrates the components and the principle of a system according to another example;
- Fig. 7: illustrates the interdependence between the control signal for the valve and the measured inclination of the working machine; and
- Fig. 8: shows a movable working machine, in which the invention is applied and which is a forest machine, particularly a harvester equipped with a harvester head.

### More detailed description of the invention

Figure 8 shows a forest machine, in which the method and the system to be presented in the following can be applied. It is particularly a harvester with a harvester head. The harvester of Fig. 8 is provided with frame steering, and it comprises a boom system which is mounted on the frame and whose end is provided with a harvester head for the processing of trunks. In the harvester of Fig. 8, a control system is applied, which will also be described next.

Figure 1 shows a solution with a closed circuit and a single-circuit system, particularly a single-motor system. By means of a hydraulic drive transmission, a steplessly controlled driving speed of the working machine is obtained, because the pump and the motor are steplessly controlled.

As shown in Fig. 1, hydraulic drive transmission 7 is typically used in the working machines, converting the mechanical power produced by a combustion engine 1 into hydraulic power in a pump 8, wherein the power is proportional to the feed pressure and the volume flow produced by the pump 8. Typically, the pump 8 is adjustable, so that the volume flow produced can be changed. The hydraulic power is utilized in a motor 9 which, in turn, generates a torque and a rotating speed for an output shaft. The feed pressure generated by the pump 8 depends on the loading and the power demand of the motor 9. The rotational speed of the motor 9 depends on the volume flow produced by the pump 8 and on the setting of the motor 9, if the motor 9 is adjustable, as in Fig. 1. The motor 9 is, in turn, coupled to a gear 10, by means of which the mechanical power is transferred to the wheels of the working machine, for example by means of cardan transmission 11 and differential shafts 12 to bogies 13 equipped with the wheels of the working machine which are mounted on pivotable hubs. The drive transmission 7 is controlled by an electronic control system 6 for the working machine, and the combustion engine 1 can be controlled by an electronic control unit (ECU) 14.

The pump 8 is, for example, an angled plate type axial piston pump with adjustable displacement (Vg), where the direction of the volume flow and thereby the rotating direction of the motor and the driving direction of the working machine can be reversed by turning the angled plate of the pump to either side of the neutral centre position. The controllable variables are the displacement of the pump and simultaneously the volume flow produced by it. The motor is, for example, an axial piston motor of the angled plate or angled shaft type, or a radial piston motor which can also have a fixed volume, in which case the motor is not adjustable. Consequently, the controllable variables are the displacement (Vg) and the rotational speed of the motor.

It is known that control systems are used for controlling working machines. The control system controls, among other things, the drive transmission, its hydraulic control circuit, and all the auxiliary functions relating to it. The control system in question operates, for example, in the PC operating environment. The display and the central processing unit of the control system are placed in the cabin, within reach for the driver. The control bus in the control automatics of the control system is based on a CAN bus solution of prior art, in which data is transferred in digital form.

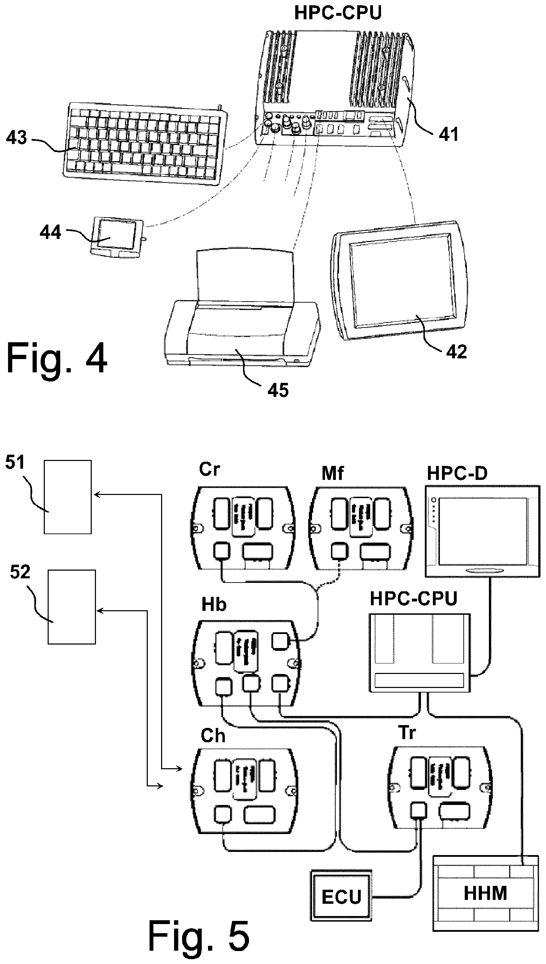

Figure 4 shows, in more detail, the equipment of a control system for a working machine, to be placed in the cabin of the working machine, in the vicinity of the driver. The equipment of the control system comprises a display module 2, a PC keyboard 43, a touchpad mouse 44, a central processing unit (HPC-CPU) with a processor and a memory 41, and often also a printer 45, as well as a hub module and a seat module 8. The equipment also comprises one or more control panels 51, as shown in Fig. 5, whose keys, push buttons and joystick are applied to operate the control system 6 (see Fig. 1). In this example, a sensor 52 or a measuring device is connected to the control system or belongs to its equipment, which device gives a signal that is proportional to the inclination of the working machine, particularly the pitch of the working machine. The inclination is defined in the driving direction of the working machine which is typically parallel to the longitudinal direction of the working machine. Preferably, the sensor 52 is fitted so that said signal defines, or it can also be used for determining whether the front end of the working machine is higher or lower than the rear end. The sensor 52 is connected, for example, to the chassis or the cabin of the working machine. The control system comprises, for example, a predetermined parameter (for example ANGLE) whose value is dependent on the inclination. The inclination can be measured continuously or merely in connection with e.g. starting.

The control system also has information about whether the working machine is driven forward, with the front end ahead, or backward, with the rear end ahead. This information is given, for example, via the control panel 51 or another switch. There is no reason to influence the volume flow input to the motor, if the aim is to move the working machine downhill by backing up or driving forward. The control system also has information about whether the steepness of the terrain or the inclination is taken into account during the operation of the working machine. The information is given, for example, via the control panel 51 or another switch, for example by setting a given value for a predetermined parameter (*e.g.* HSA_ON).

For implementing the presented solution, the required application and the software included therein are installed in the central processing unit of the processor based control system comprising the necessary RAM and mass storage. The control system utilizes an operating system known as such, under which the application is run. The equipment and the operating system comprise the applications and protocol means necessary for communication with other devices.

The control system of the working machine is based on, for example, CAN (Controller Area Network) bus technology and distributed control. The system consists of independent intelligent modules communicating via the CAN bus. In the case of, for example, a forest working machine, the control system controls the combustion engine, the drive transmission, the boom system, and, if necessary, also the harvester heads, as well as the auxiliary functions relating to these. The system typically consists of modules in the CAN bus, shown in more detail in Fig. 5. The modules of the system include a display module HPC-D, the central processing unit HPC-CPU (Harvester PC - Computer Processor Unit) of the computer, and a bus distribution module Hub (Hub module), to which the other modules are directly connected, except for the display and a harvester head module. All the control devices and control panels 51 needed for controlling the system are coupled to a chair module Ch. For example, the accelerator or pedal 3 (see Fig. 1), pressed by the driver to change the driving speed when driving the working machine, is connected to the chair module. A required sensor 4, such as a rheostat, is connected to the pedal, for giving the control system 6 a setting signal that is dependent on the position of the pedal 3. The position of the pedal 3 can be changed steplessly between the off position and the maximum movement. A transmission module Tr is responsible for the control and the communication of the combustion engine, the drive transmission and the auxiliary functions relating to the basic machine. In other words, the power transmission module controls the displacement of said pump and motor. The engine control unit (ECU) is the control unit of the motor which controls and monitors the functions of the engine. When the forest machine is a forwarder, the control system has more limited modules than a harvester equipped with a harvester head.

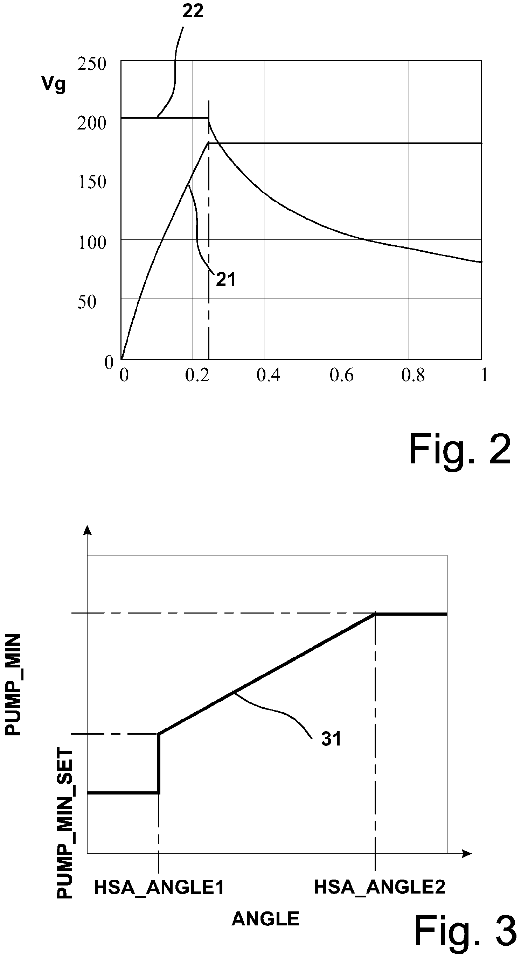

As shown in Fig. 2, the drive transmission is normally controlled in such a way that the maximum position of the pedal can be used to achieve the maximum driving speed of the working machine, whereby the speed is zero in the free position of the pedal. The figure illustrates the behaviour of the displacement of the pump (curve 21) and the motor (curve 22) in different positions of the pedal 3 (horizontal axis) in the case of a closed system according to Fig. 1.

In an example and simultaneously referring to Fig. 3, a first limit value (for example parameter HSA_ANGLE1) has been set for the inclination in the control system 6, which value has to be exceeded by the inclination (ANGLE) before there is an attempt to affect the minimum value of the control signal of the pump (*e.g*. parameter PUMP_MIN). If the inclination is not sufficient, a normal predetermined value (PUMP_MIN_SET) is used as the minimum control signal for the pump. Between the inclination and the minimum control signal for the pump, a predetermined interdependency has been defined, of which the control system 6 takes care.

In an example and Fig. 3, said interdependency is adjusted to be such that the minimum control signal of the pump increases as the inclination increases. In an alternative, the interdependency is linearly increasing, wherein the interdependency is defined by means of *e.g*. an angular coefficient. In an alternative, a growth percentage (PERCENT1) dependent on the inclination is defined, by which the minimum control signal for the pump is increased (PUMP_MIN = PUMP_MIN_SET * (1+PERCENT1/100)). In an example, PERCENT1 receives the value 10%, when ANGLE receives the value 8°, which is simultaneously the first limit angle HSA_ANGLE1.

In an example, a second limit value (*e.g*. the parameter HSA_ANGLE2) is set for the inclination in the control system. If the inclination (ANGLE) exceeds the second limit value, said interdependency will be changed. In an alternative, the minimum control signal of the pump is no longer increased but it remains constant or does not exceed the set maximum value if the inclination exceeds the second limit value. In an example, PERCENT1 receives the value 50%, when ANGLE receives the value 25°, which is simultaneously the second limit angle HSA_ANGLE2. If the inclination increases still further, PERCENT1 will not change. In an alternative, a second growth percentage (*e.g*. parameter PERCENT2) dependent on the inclination is defined and taken into use if the inclination exceeds the second limit value. Preferably, the second growth percentage is constant, but it may also be dependent on the inclination.

Furthermore, the minimum level of the control signal for the pump may also depend on whether the working machine is moving uphill with the front end or the rear end ahead. Moreover, the control system may have no effect on the minimum value of the control signal for the pump, if the working machine is moving downhill. Thus, the minimum control signal used for the pump is, for example, a normal predetermined value.

The control system examines the magnitude of the inclination, the state (off) of the separate parking brake of the working machine, the state (on) of the operating brake of the working machine, and the driving direction on the hillside. The minimum level of the control signal for the pump will be determined according to the conditions presented above, if the function is on (HSA_ON). When the control signal of the pump exceeds said minimum level, it is dependent on the control value or the setting signal of the pedal, also during stoppage of the working machine, wherein the control signal of the pump is allowed to decrease to the level of the normal predetermined value (cf. PUMP_MIN_SET).

If the pump control signal defined by the control value or the pedal setting signal does not exceed said new minimum level, said new minimum level is in use also during stoppage of the working machine.

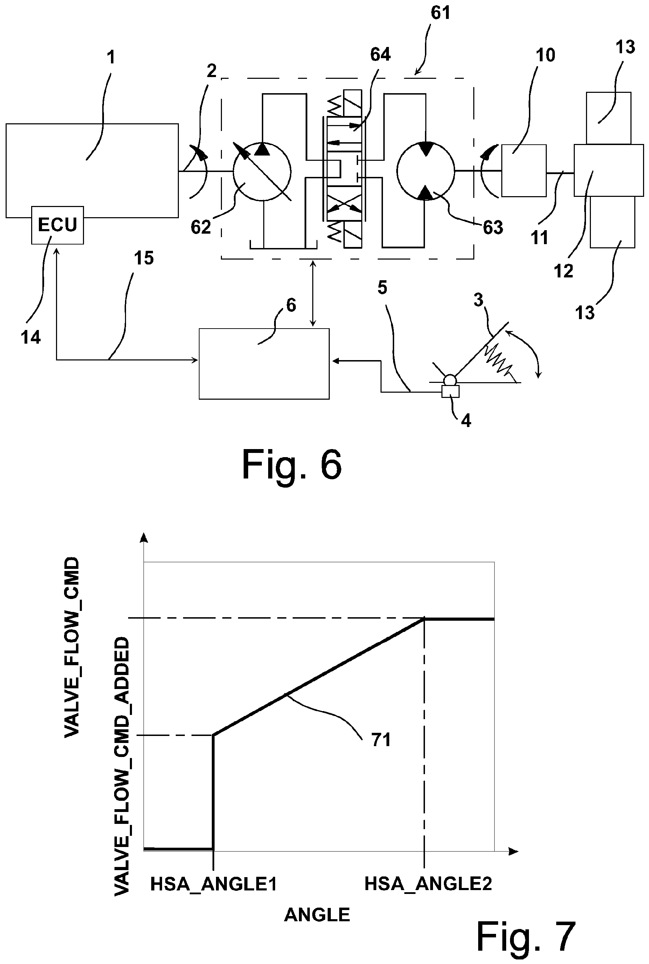

Figure 6 shows a solution with an open circuit. By means of a hydraulic drive transmission, an adjustable driving speed is obtained for the working machine, because an adjustable volume flow is obtained for the motor by means of a valve. Preferably, it is a directional valve which is electronically controlled and proportionally operated. The volume flow of the valve is dependent on the valve position and opening, which, in turn, are controlled by means of the control signal. Typically, the control signal is a current signal, on which the volume flow of the valve 64 is dependent. In Fig. 6, the valve is shown in a principle view, but said valve and its functions can also be implemented by means of one or more separate hydraulic components which are connected to each other by channels. The term valve refers in this description also to the entity of said components, by which corresponding functions are provided as in the valve 64 of Fig. 6.

In Fig. 6, the same reference numerals have been used for the same type of components as in the system of Fig. 1. As shown in Fig. 6, hydraulic drive transmission 61 is typically used in the working machines, converting the mechanical power produced by a combustion engine 1 into hydraulic power in a pump 62, wherein the power is proportional to the feed pressure and the volume flow produced by the pump 62. The pump 62 is typically adjustable, wherein the volume flow produced can be changed. The hydraulic power is utilized in a motor 63 which, in turn, generates a torque and a rotating speed for an output shaft. The feed pressure and volume flow produced by the pump 62 are input to the motor 63 via a valve 64, and typically also the volume flow returning from the motor 63 is returned to the tank via said valve 64. It is typically a controlled directional valve, according to one example a four-pass valve with at least two coupling positions, wherein it is possible to change the direction of rotation of the motor 63 and the flowing direction of the volume flow. It is preferably an electronically controlled, proportional directional valve which is controlled by the control system 6 by means of a control signal. By means of said valve, a steplessly adjustable volume flow is obtained, for controlling the motor. In the example of Fig. 6, the valve 64 also has a coupling position in which the volume flow is led from the pump directly into the tank. According to another example, the valve 64 also has a coupling position, in which the passages to the pump and to the tank are closed. The rotational speed of the motor 63 depends on the volume flow given by the valve 64. The drive transmission 61 is controlled by the electronic control system 6 of the working machine.

The pump 62 is, for example, an axial piston pump with adjustable displacement (Vg). The controllable variables are the displacement of the pump and simultaneously the volume flow produced by it. The motor has typically a fixed volume, wherein the motor is not adjustable, for example an axial piston motor or a radial piston motor. The controllable variables thus include the rotational speed of the motor.

In an example and simultaneously referring to Fig. 7, a first limit value (for example parameter HSA_ANGLE1) has been set for the inclination in the control system 6, which value has to be exceeded by the inclination (ANGLE) before there is an attempt to affect the level of the control signal of the valve by increasing it (*e.g.* parameter VALVE_FLOW_CMD_ADDED) compared with the normal level which is determined on the basis of the given control value. If the inclination is not sufficient, the normal level of the control signal (VALVE_FLOW_CMD) is used as the control signal for the valve (for example, value 0% to 100%, depending on the desired volume flow). Between the inclination and the valve control signal, a predetermined interdependency has been defined, of which the control system 6 takes care.

According to an example and Fig. 7, said interdependency is adjusted to be such that the valve control signal is increased as the inclination increases. In an alternative, the interdependency is linearly increasing, wherein the interdependency is defined by means of e. g. an angular coefficient. In an alternative, a growth percentage (PERCENT1) dependent on the inclination is defined, by which percentage the valve control signal is increased (VALVE_FLOW_CMD_ADDED = VALVE_FLOW_CMD_+ PERCENT1). In an example, PERCENT1 receives the value 10%, when ANGLE receives the value 8%, which is simultaneously the first limit angle HSA_ANGLE1.

In an example, a second limit value for the inclination (*e.g*. the parameter HSA_ANGLE2) is also set in the control system. If the inclination (ANGLE) exceeds the second limit value, said interdependency will be changed. In an alternative, the valve control signal is no more increased but it remains constant or does not exceed the set maximum value if the inclination exceeds the second limit value. In an example, PERCENT1 receives the value 50%, when ANGLE receives the value 25°, which is simultaneously the second limit value HSA_ANGLE2. If the inclination increases still further, PERCENT1 will not change. In an alternative, a second growth percentage (*e.g*. parameter PERCENT2) dependent on the inclination is defined and taken into use if the inclination exceeds the second limit value. Preferably, the second growth percentage is constant, but it may also be dependent on the inclination.

Furthermore, the level of the valve control signal may also depend on whether the working machine is moving uphill with the front end or the rear end ahead. Moreover, the control system may have no effect on the value of the control signal, if the working machine is moving downhill. Thus, for example the normal level (*e.g*. 0% to 100%) is used as the valve control signal.

The control system examines the magnitude of the inclination, the state (off) of the parking brake of the working machine, the state (on) of the operating brake of the working machine, and the driving direction on the hillside. The level of the valve control signal will be determined according to the conditions presented above, if the function is on (HSA_ON). The valve control signal is dependent on the control value or the pedal setting signal, even during a stoppage of the working machine, when the valve control signal is allowed to decrease to the normal level (cf. VALVE_FLOW_CMD).

If the valve control signal defined by the control value or the pedal setting signal does not exceed said new added control signal, said new control signal will be in use also during stoppage of the working machine.

The invention is not limited solely to the examples presented above, but it may vary within the scope of the appended claims.

## Claims

1. A method in controlling a system for hydraulic drive transmission in a working machine, the system comprising:
- a control system (6) for controlling the function,
- a pump (8) for producing a volume flow and a feed pressure, and
- a motor (9) for receiving the volume flow and utilizing the feed pressure for moving the working machine,
which method comprises:
- controlling the system with a control signal having a value given by the control system, and supplying the motor with a volume flow that is dependent on the control signal,
- keeping the working machine stopped and stationary, and
- measuring, when the working machine is stopped, the inclination of the working machine in the direction of the driving movement, the inclination being dependent on the terrain on which the working machine is located,
**characterized in that** the method comprises:
- controlling the pump with the control signal which has a preset minimum value, and using the pump for producing a volume flow which is dependent on the control signal,
- giving the control signal a new minimum value which is dependent on the magnitude of the inclination, and
- controlling the pump with the control signal whose value is at least equal to the new minimum value when the working machine is steered to move from its stationary position and the selected driving direction of the working machine is upwards in the direction of the inclination.

2. A method in controlling a system for hydraulic drive transmission in a working machine, the system comprising:
- a control system (6) for controlling the function,
- a pump (8) for producing a volume flow and a feed pressure,
- a motor (9) for receiving the volume flow and utilizing the feed pressure for moving the working machine, and
- a valve (64) for controlling the magnitude of the volume flow to be supplied to the motor,
which method comprises:
- controlling the system with a control signal having a value given by the control system, and supplying the motor with a volume flow that is dependent on the control signal,
- controlling the valve with the control signal and supplying the motor, by means of the valve, with a volume flow that is dependent on the control signal,
- keeping the working machine stopped and stationary, and
- measuring, when the working machine is stopped, the inclination of the working machine in the direction of the driving movement, the inclination being dependent on the terrain on which the working machine is located,
**characterized in that** the method comprises:
- giving the control signal a new added value which is dependent on the magnitude of the inclination, and
- controlling the valve with the control signal whose value is equal to the new added value when the working machine is steered to move from its stationary position and the selected driving direction of the working machine is upwards in the direction of the inclination.

3. The method according to claim 1 or 2, wherein the method comprises setting the magnitude of the volume flow to be supplied to the motor in such a way that the magnitude is the greater, the greater the inclination is.

4. A system for hydraulic drive transmission in a working machine, comprising:
- a pump (8) configured to produce a feed pressure and a volume flow,
- a motor (9) receiving the volume flow and utilizing the feed pressure for moving the working machine,
- a control system (6) configured to generate a control signal which has a value given by the control system and on which the volume flow to be supplied to the motor is dependent, wherein the pump is configured to produce a volume flow which is dependent on the control signal,
- a sensor (52) which is in contact with the control system (6) and is adapted to measure, when the working machine is stopped, the inclination of the working machine in the direction of the driving motion, dependent on the terrain on which the working machine is located,
the system being **characterized by**:
- the control system being configured to control the pump with the control signal which has a preset minimum value,
- the control system (6) being further configured to give the control signal a new minimum value which is dependent on the magnitude of the inclination, and
- the control signal whose value is at least equal to the new minimum value when the working machine is steered to move from its stationary position and the selected driving direction of the working machine is upwards in the direction of the inclination.

5. A system for hydraulic drive transmission in a working machine, comprising:
- a pump (8) configured to produce a feed pressure and a volume flow,
- a motor (9) receiving the volume flow and utilizing the feed pressure for moving the working machine,
- a control system (6) configured to generate a control signal which has a value given by the control system and on which the volume flow to be supplied to the motor is dependent, and
- a valve (64) configured to control the magnitude of the volume flow to be supplied to the motor,
wherein
- the control system is configured to control the valve with the control signal which has a value,
- the valve is configured to supply the motor with a volume flow which is dependent on the control signal, and
- the system further comprises a sensor (52) which is in contact with the control system (6) and is adapted to measure, when the working machine is stopped, the inclination of the working machine in the direction of the driving motion, dependent on the terrain on which the working machine is located,
**characterized in that**:
- the control system (6) is further configured to give the control signal a new added value which is dependent on the magnitude of the inclination, and
- the control signal has a value which is equal to the new added value when the working machine is steered to move from its stationary position and the selected driving direction of the working machine is upwards in the direction of the inclination.

6. The system according to claim 4 or 5, wherein the control system is further configured to set the magnitude of the volume flow to be supplied to the motor in such a way that the magnitude is the greater, the greater the inclination is, and a rule, a table, or a computing algorithm defining the interdependence between the new value of the control signal and the inclination, is kept stored in the control system.

7. The system according to claim 4, 5, or 6, wherein the system further comprises a pedal (3) or a joystick, on whose position the control signal is dependent.

8. A forest machine comprising the system according to claim 4 or 5, and which is a forest machine equipped with a felling head, a harvester equipped with a harvester head, or a forwarder equipped for the transportation of tree trunks.

## Patentansprüche

1. Verfahren zum Steuern eines Systems für eine hydraulische Antriebskraftübertragung in einer Arbeitsmaschine, wobei das System Folgendes umfasst:
- ein Steuerungssystem (6) zum Steuern der Funktion,
- eine Pumpe (8) zum Erzeugen eines Volumenflusses und eines Zufuhrdrucks, und
- einen Motor (9) zum Empfangen des Volumenflusses und Verwenden des Zufuhrdrucks zum Bewegen der Arbeitsmaschine,
wobei das Verfahren Folgendes umfasst:
- Steuern des Systems mit einem Steuersignal, das einen Wert aufweist, der durch das Steuerungssystem vorgegeben wird, und Beschicken des Motors mit einem Volumenfluss, der von dem Steuersignal abhängig ist,
- Halten der Arbeitsmaschine in einem gestoppten und ortsfesten Zustand, und
- Messen der Neigung der Arbeitsmaschine in Richtung der Fahrbewegung, wenn die Arbeitsmaschine gestoppt hat, wobei die Neigung von dem Gelände abhängt, auf dem sich die Arbeitsmaschine befindet,
**dadurch gekennzeichnet, dass** das Verfahren Folgendes umfasst:
- Steuern der Pumpe mit dem Steuersignal, das einen voreingestellten Mindestwert aufweist, und Verwenden der Pumpe zum Erzeugen eines Volumenflusses, der von dem Steuersignal abhängig ist,
- Vergeben eines neuen Mindestwertes an das Steuersignal, der von der Größenordnung der Neigung abhängig ist, und
- Steuern der Pumpe mit dem Steuersignal, dessen Wert mindestens dem neuen Mindestwert entspricht, wenn die Arbeitsmaschine gelenkt wird, um sich aus ihrer ortsfesten Position zu bewegen, und die gewählte Fahrtrichtung der Arbeitsmaschine nach oben in Richtung der Neigung zeigt.

2. Verfahren zum Steuern eines Systems für eine hydraulische Antriebskraftübertragung in einer Arbeitsmaschine, wobei das System Folgendes umfasst:
- ein Steuerungssystem (6) zum Steuern der Funktion,
- eine Pumpe (8) zum Erzeugen eines Volumenflusses und eines Zufuhrdrucks,
- einen Motor (9) zum Empfangen des Volumenflusses und Verwenden des Zufuhrdrucks zum Bewegen der Arbeitsmaschine, und
- ein Ventil (64) zum Steuern der Größenordnung des dem Motor zuzuführenden Volumenflusses,
wobei das Verfahren Folgendes umfasst:
- Steuern des Systems mit einem Steuersignal, das einen Wert aufweist, der durch das Steuerungssystem vorgegeben wird, und Beschicken des Motors mit einem Volumenfluss, der von dem Steuersignal abhängig ist,
- Steuern des Ventils mit dem Steuersignal, und Beschicken des Motors über das Ventil mit einem Volumenfluss, der von dem Steuersignal abhängig ist,
- Halten der Arbeitsmaschine in einem gestoppten und ortsfesten Zustand, und
- Messen der Neigung der Arbeitsmaschine in Richtung der Fahrbewegung, wenn die Arbeitsmaschine gestoppt hat, wobei die Neigung von dem Gelände abhängt, auf dem sich die Arbeitsmaschine befindet,
**dadurch gekennzeichnet, dass** das Verfahren Folgendes umfasst:
- Vergeben eines neuen hinzugegebenen Wertes an das Steuersignal, der von der Größenordnung der Neigung abhängig ist, und
- Steuern des Ventils mit dem Steuersignal, dessen Wert dem neuen hinzugegebenen Wert entspricht, wenn die Arbeitsmaschine gelenkt wird, um sich aus ihrer ortsfesten Position zu bewegen, und die gewählte Fahrtrichtung der Arbeitsmaschine nach oben in Richtung der Neigung zeigt.

3. Verfahren nach Anspruch 1 oder 2, wobei das Verfahren das Einstellen der Größenordnung des dem Motor zuzuführenden Volumenflusses so umfasst, dass die Größenordnung umso größer ist, je größer die Neigung ist.

4. System für eine hydraulische Antriebskraftübertragung in einer Arbeitsmaschine, umfassend:
- eine Pumpe (8), die dafür ausgestaltet ist, einen Zufuhrdruck und einen Volumenfluss zu erzeugen,
- einen Motor (9), der den Volumenfluss empfängt und den Zufuhrdruck zum Bewegen der Arbeitsmaschine verwendet,
- ein Steuerungssystem (6), das dafür ausgestaltet ist, ein Steuersignal zu generieren, das einen Wert aufweist, der ihm durch das Steuerungssystem gegeben wurde und von dem der dem Motor zuzuführende Volumenfluss abhängig ist, wobei die Pumpe dafür ausgestaltet ist, einen Volumenfluss zu erzeugen, der von dem Steuerungssystem abhängig ist,
- einen Sensor (52), der in Kontakt mit dem Steuerungssystem (6) steht und dafür ausgelegt ist, wenn die Arbeitsmaschine gestoppt hat, die Neigung der Arbeitsmaschine in Richtung der Antriebsbewegung in Abhängigkeit von dem Gelände, auf dem sich die Arbeitsmaschine befindet, zu messen,
wobei das System **dadurch gekennzeichnet ist, dass:**
- das Steuerungssystem dafür ausgestaltet ist, die Pumpe mit dem Steuersignal zu steuern, das einen voreingestellten Mindestwert aufweist,
- das Steuerungssystem (6) des Weiteren dafür ausgestaltet ist, dem Steuersignal einen neuen Mindestwert zu geben, der von der Größenordnung der Neigung abhängig ist, und
- das Steuersignal, dessen Wert mindestens dem neuen Mindestwert entspricht, wenn die Arbeitsmaschine gelenkt wird, um sich aus ihrer ortsfesten Position zu bewegen, und die gewählte Fahrtrichtung der Arbeitsmaschine nach oben in Richtung der Neigung zeigt.

5. System für eine hydraulische Antriebskraftübertragung in einer Arbeitsmaschine, umfassend:
- eine Pumpe (8), die dafür ausgestaltet ist, einen Zufuhrdruck und einen Volumenfluss zu erzeugen,
- einen Motor (9), der den Volumenfluss empfängt und den Zufuhrdruck zum Bewegen der Arbeitsmaschine verwendet,
- ein Steuerungssystem (6), das dafür ausgestaltet ist, ein Steuersignal zu generieren, das einen Wert aufweist, der ihm durch das Steuerungssystem gegeben wurde und von dem der dem Motor zuzuführende Volumenfluss abhängig ist, und
- ein Ventil (64), das dafür ausgestaltet ist, die Größenordnung des dem Motor zuzuführenden Volumenflusses zu steuern,
wobei
- das Steuerungssystem dafür ausgestaltet ist, das Ventil mit dem Steuersignal zu steuern, das einen Wert hat,
- das Ventil dafür ausgestaltet ist, den Motor mit einem Volumenfluss zu beschicken, der von dem Steuersignal abhängig ist, und
- das System des Weiteren einen Sensor (52) umfasst, der in Kontakt mit dem Steuerungssystem (6) steht und dafür ausgelegt ist, wenn die Arbeitsmaschine gestoppt hat, die Neigung der Arbeitsmaschine in Richtung der Antriebsbewegung in Abhängigkeit von dem Gelände, auf dem sich die Arbeitsmaschine befindet, zu messen,
**dadurch gekennzeichnet, dass:**
- das Steuerungssystem (6) des Weiteren dafür ausgestaltet ist, dem Steuersignal einen neuen hinzugefügten Wert zu geben, der von der Größenordnung der Neigung abhängig ist, und
- das Steuersignal einen Wert hat, der mindestens dem neuen hinzugefügten Wert entspricht, wenn die Arbeitsmaschine gelenkt wird, um sich aus ihrer ortsfesten Position zu bewegen, und die gewählte Fahrtrichtung der Arbeitsmaschine nach oben in Richtung der Neigung zeigt.

6. Steuerungssystem nach Anspruch 4 oder 5, wobei das Steuerungssystem des Weiteren dafür ausgestaltet ist, die Größenordnung des dem Motor zuzuführenden Volumenflusses so einzustellen, dass die Größenordnung umso größer ist, je größer die Neigung ist, und eine Regel, eine Tabelle oder ein Berechnungsalgorithmus, der die gegenseitige Abhängigkeit zwischen dem neuen Wert des Steuersignals und der Neigung definiert, in dem Steuerungssystem gespeichert gehalten wird.

7. System nach Anspruch 4, 5 oder 6, wobei das System des Weiteren ein Pedal (3) oder einen Joystick umfasst, von dessen Position das Steuersignal abhängig ist.

8. Forstmaschine, die das System nach Anspruch 4 oder 5 umfasst und die eine Forstmaschine ist, die mit einem Fällkopf ausgestattet ist, ein Harvester ist, der mit einem Erntekopf ausgestattet ist, oder ein Forwarder ist, der für den Transport von Baumstämmen ausgestattet ist.

## Revendications

1. Procédé de commande d'un système de transmission d'entraînement hydraulique dans une machine de travail, le système comprenant :
- un système de commande (6) destiné à commander le fonctionnement ;
- une pompe (8) destinée à produire un débit volumique et une pression de refoulement ;
- un moteur (9) destiné à recevoir le débit volumique et à utiliser la pression de refoulement pour déplacer la machine de travail ;
lequel procédé comprend les étapes suivantes :
- commander le système avec un signal de commande ayant une valeur appliquée par le système de commande, et alimenter le moteur avec un débit volumique qui dépend dudit signal de commande ;
- maintenir la machine de travail arrêtée et stationnaire, et
- mesurer, lorsque la machine de travail est arrêtée, l'inclinaison de la machine de travail dans le sens du mouvement d'entraînement, l'inclinaison dépendant du terrain sur lequel se trouve la machine de travail ; et
**caractérisé en ce que** le procédé comprend les étapes suivantes :
- commander la pompe avec le signal de commande qui présente une valeur minimale préréglée et utiliser la pompe pour produire un débit volumique qui dépend du signal de commande,
- appliquer audit signal de commande une nouvelle valeur minimale qui dépend du degré d'inclinaison, et
- commander la pompe avec le signal de commande dont la valeur est au moins égale à la nouvelle valeur minimale lorsque la machine de travail est dirigée pour se déplacer depuis sa position stationnaire et que le sens d'entraînement sélectionné de la machine de travail est orienté vers le haut dans le sens de l'inclinaison.

2. Procédé de commande d'un système de transmission d'entraînement hydraulique dans une machine de travail, le système comprenant :
- un système de commande (6) destiné à commander le fonctionnement,
- une pompe (8) destinée à produire un débit volumique et une pression de refoulement,
- un moteur (9) destiné à recevoir le débit volumique et à utiliser la pression de refoulement pour déplacer la machine de travail, et
- une vanne (64) destinée à commander l'intensité du débit volumique à fournir au moteur,
lequel procédé comprend les étapes suivantes :
- commander le système avec un signal de commande ayant une valeur appliquée par le système de commande, et alimenter le moteur avec un débit volumique qui dépend du signal de commande,
- commander la vanne avec le signal de commande et alimenter le moteur, au moyen de la vanne, avec un débit volumique qui dépend du signal de commande,
- maintenir la machine de travail arrêtée et stationnaire, et
- mesurer, lorsque la machine de travail est arrêtée, l'inclinaison de la machine de travail dans le sens du mouvement d'entraînement, l'inclinaison dépendant du terrain sur lequel se trouve la machine de travail,
**caractérisé en ce que** le procédé comprend les étapes suivantes :
- appliquer au signal de commande une nouvelle valeur ajoutée qui dépend du degré d'inclinaison, et
- commander la vanne avec le signal de commande dont la valeur est égale à la nouvelle valeur ajoutée lorsque la machine de travail est dirigée pour se déplacer depuis sa position stationnaire et que le sens d'entraînement sélectionné de la machine de travail est orienté vers le haut dans le sens d'inclinaison.

3. Procédé selon la revendication 1 ou 2, le procédé comprenant le réglage de l'intensité du débit volumique à fournir au moteur de telle sorte que l'intensité soit d'autant plus grande que l'inclinaison est importante.

4. Système de transmission d'entraînement hydraulique dans une machine de travail, ledit système comprenant :
- une pompe (8) conçue pour produire une pression de refoulement et un débit volumique,
- un moteur (9) recevant le débit volumique et utilisant la pression de refoulement pour déplacer la machine de travail,
- un système de commande (6) conçu pour générer un signal de commande qui a une valeur appliquée par le système de commande et dont dépend le débit volumique à fournir au moteur, la pompe étant conçue pour produire un débit volumique qui dépend du signal de commande,
- un capteur (52) qui est en contact avec le système de commande (6) et qui est adapté pour mesurer, lorsque la machine de travail est arrêtée, l'inclinaison de la machine de travail dans le sens du mouvement d'entraînement, en fonction du terrain sur lequel se trouve la machine de travail,
le système étant **caractérisé en ce que** :
- le système de commande est conçu pour commander la pompe avec le signal de commande qui a une valeur minimale préréglée,
- le système de commande (6) est en outre conçu pour appliquer au signal de commande une nouvelle valeur minimale qui dépend du degré d'inclinaison, et
- le signal de commande dont la valeur est au moins égale à la nouvelle valeur minimale lorsque la machine de travail est dirigée pour se déplacer depuis sa position stationnaire et que le sens d'entraînement sélectionné de la machine de travail est orienté vers le haut dans le sens de l'inclinaison.

5. Système de transmission d'entraînement hydraulique dans une machine de travail, comprenant :
- une pompe (8) conçue pour produire une pression de refoulement et un débit volumique,
- un moteur (9) recevant le débit volumique et utilisant la pression de refoulement pour déplacer la machine de travail,
- un système de commande (6) conçu pour générer un signal de commande qui a une valeur appliquée par le système de commande et dont dépend le débit volumique à fournir au moteur, et
- une vanne (64) conçue pour commander l'intensité du débit volumique à fournir au moteur,
- le système de commande étant conçu pour commander la vanne avec le signal de commande qui a une valeur,
- la vanne étant conçue pour alimenter le moteur avec un débit volumique qui dépend du signal de commande, et
- le système comprenant en outre un capteur (52) qui est en contact avec le système de commande (6) et qui est adapté pour mesurer, lorsque la machine de travail est arrêtée, l'inclinaison de la machine de travail dans le sens du mouvement d'entraînement, en fonction du terrain sur lequel se trouve la machine de travail,
**caractérisé en ce que** :
- le système de commande (6) est en outre conçu pour appliquer au signal de commande une nouvelle valeur ajoutée qui dépend du degré d'inclinaison, et
- le signal de commande a une valeur qui est égale à la nouvelle valeur ajoutée lorsque la machine de travail est dirigée pour se déplacer depuis sa position stationnaire et que le sens d'entraînement sélectionné de la machine de travail est orienté vers le haut dans le sens de l'inclinaison.

6. Système selon la revendication 4 ou 5, le système de commande étant en outre conçu pour régler l'intensité du débit volumique à fournir au moteur de telle sorte que l'intensité soit d'autant plus grande que l'inclinaison est importante, et une règle, une table ou un algorithme de calcul définissant l'interdépendance entre la nouvelle valeur du signal de commande et l'inclinaison étant conservé en mémoire dans le système de commande.

7. Système selon la revendication 4, 5 ou 6, le système comprenant en outre une pédale (3) ou une manette, de la position de laquelle dépend le signal de commande.

8. Machine forestière comprenant le système selon la revendication 4 ou 5, et qui est une machine forestière équipée d'une tête d'abattage, une abatteuse équipée d'une tête d'abatteuse ou un porteur équipé pour le transport de troncs d'arbres.
